# EUROPÄISCHE PATENTANMELDUNG

(11) **EP 4 089 494 A1**
(43) Veröffentlichungstag der Anmeldung: **16.11.2022**
(21) Anmeldenummer: 22172453.7
(22) Anmeldetag: 10.05.2022
(51) Int. Cl.: G05B 19/418

(54) **SELBSTLERNENDE LEBENSMITTELVERARBEITUNGSVORRICHTUNG UND VERFAHREN**

(30) Priorität: 12.05.2021 DE 102021112383
(71) Anmelder: Multivac Sepp Haggenmüller GmbH & Co. KG, 87787 Wolfertschwenden (DE)
(72) Erfinder: ROTH, Martin, Ofterschwang (DE); GAIBLER, Frank, Buxheim (DE); BINZER, Patrick, Kempten (DE); GRATHWOHL, Marius, Senden (DE)
(74) Vertreter: Grünecker Patent- und Rechtsanwälte PartG mbB

(57) **Zusammenfassung**

Die Erfindung betrifft eine Vorrichtung (1) umfassend mindestens eine Lebensmittelverarbeitungsmaschine (A - F) sowie einen Rezeptgenerator (R), der dazu konfiguriert ist, auf Basis von an der Lebensmittelverarbeitungsmaschine (A - F) erfassten Daten ein daran eingestelltes Regelwerk (RW) anzupassen. Ferner bezieht sich die Erfindung auf ein Verfahren zur Generierung eines Rezeptdatensatzes für einen Einstellvorgang einer Lebensmittelverarbeitungsmaschine (A - F), wobei ein zur Herstellung des Rezeptdatensatzes eingesetzter Rezeptgenerator (R) anhand von Maschineneinstellungen und/oder erfassten Messwerten während des Betriebs der Lebensmittelverarbeitungsmaschine (A - F) trainiert werden kann.

## Beschreibung

Die vorliegende Erfindung betrifft eine Vorrichtung gemäß dem Oberbegriff des Anspruchs 1. Weiter betrifft die vorliegende Erfindung ein Verfahren gemäß Anspruch 15.

Eine derartige Vorrichtung ist aus der WO 2017/021556 A1 bekannt. Diese Vorrichtung weist einen Rezeptgenerator auf, der in Funktion eines Autopiloten für einen Einstellvorgang einer Verpackungsmaschine einsetzbar ist. Der Rezeptgenerator ist dazu ausgebildet ist, anhand eines Regelwerks, das von Experten auf Basis deren Erfahrungsschatzes hergestellt ist, aus wenigen von einem Bediener an der Verpackungsmaschine aufgerufenen Eingabewerten eine Vielzahl von für den Verpackungsprozess benötigten spezifischen Rezeptvariablen zu berechnen, um darauf basierend eine Steuervorrichtung der Verpackungsmaschine für deren Arbeitsprozess mit bestimmten Prozessparametern vorzubelegen. Damit kann der Einstellvorgang beschleunigt und somit die Produktivität der Verpackungsmaschine gesteigert werden.

Das Regelwerk des Rezeptgenerators bildet eine Formelsammlung aus, die von Experten ergänzt und/oder überarbeitet werden kann. Damit ist die Qualität des Regelwerks vom Fachwissen der Experten abhängig. Vor allem ist es sehr aufwändig, das Regelwerk des Rezeptgenerators hinsichtlich sich ständig ändernden Maschinentypen und/oder Verpackungsmaterialien anzupassen. Schwierig dürfte es auch sein, das maschinenherstellerseitige Fachwissen optimal mit den anwenderseitigen Interessen aufeinander abzustimmen. Insbesondere könnten von Anwendern gewünschte spezifische Anwendungsfälle von allgemeinen, anhand des Regelwerks durchgeführten Berechnungen abweichen.

WO 2009/109 178 A1 offenbart eine Verpackungsmaschine, an welcher auf Basis von Bedienereingaben mittels einer voreingestellten Expertendatenbank ein Datensatz für den Betrieb der Verpackungsmaschine hergeleitet wird, wobei vorbestimmte Zielgrößen herzustellender Artikel während des Betriebs der Verpackungsmaschine überprüft werden, um ggf. den vorausgehend bestimmten Datensatz zu optimieren. Bei dieser Vorgehensweise wird versucht, durch eine schrittweise Anpassung der jeweiligen im Datensatz enthaltenen Prozessparameter einen optimalen Betriebspunkt der Verpackungsmaschine zu erreichen.

Aufgabe der Erfindung ist es, eine Vorrichtung der zuvor beschriebenen Art zur Verfügung zu stellen, womit sich ein optimaler Betrieb einer Lebensmittelverarbeitungsmaschine noch einfacher, schneller und genauer einstellen lässt. Ferner soll ein diesbezügliches Verfahren zur Verfügung gestellt werden.

Diese Aufgabe wird gelöst mittels einer Vorrichtung gemäß dem Anspruch 1 sowie anhand eines Verfahrens gemäß Anspruch 15.

Die Erfindung bezieht sich auf eine Vorrichtung mit mindestens einer Lebensmittelverarbeitungsmaschine, die eine Steuereinheit mit einem Prozessparametergenerator umfasst. Der Prozessparametergenerator ist dazu konfiguriert, für einen Arbeitsprozess der Lebensmittelverarbeitungsmaschine spezifische Prozessparameter zu bestimmen, wobei die Steuereinheit ferner einen Rezeptgenerator für einen dem Arbeitsprozess vorangehenden Einstellvorgang der Lebensmittelverarbeitungsmaschine umfasst oder wobei die Vorrichtung einen als separate Einheit ausgebildeten Rezeptgenerator aufweist, der mit der Steuereinheit der Lebensmittelverarbeitungsmaschine funktional verbindbar ist.

Der jeweilige Rezeptgenerator weist mindestens ein Regelwerk zur Bestimmung von Rezeptvariablen für den Einstellvorgang der Lebensmittelverarbeitungsmaschine auf und ist dazu ausgebildet, anhand eines oder mehrerer Eingabewerte die Rezeptvariablen zu erzeugen und daraus einen Rezeptdatensatz für den Einstellvorgang der Lebensmittelverarbeitungsmaschine zu bilden.

Der Prozessparametergenerator ist dazu ausgebildet, die Steuereinheit für den Arbeitsprozess der Lebensmittelverarbeitungsmaschine mit spezifischen Prozessparametern vorzubelegen, die zumindest teilweise auf den jeweiligen für den Einstellvorgang erzeugten Rezeptvariablen des Rezeptdatensatzes basieren.

Erfindungsgemäß ist der Rezeptgenerator dazu konfiguriert, auf Basis von an der Lebensmittelverarbeitungsmaschine erfassten und an ihn übermittelten (Trainings-)Daten selbstlernend das an ihm zur Bestimmung von Rezeptvariablen für den Einstellvorgang eingestellte Regelwerk fortlaufend anhand eines Algorithmus anzupassen. Somit kann das Regelwerk des Rezeptgenerators fortlaufend auf Basis von an der Lebensmittelverarbeitungsmaschine während dessen Betriebs erfassbaren Daten, insbesondere durch deren Vergleich mit einer oder mehreren Zielgrößen, verifiziert oder ggf. überarbeitet werden. Damit ist es vor allem auch möglich, das ursprünglich von Experten generierte Regelwerk des Rezeptgenerators angesichts des tatsächlichen Betriebs der Lebensmittelverarbeitungsmaschine artifiziell zu trainieren, um das Regelwerk einschließlich dessen programmierter Formelsammlung kontinuierlich weiter zu entwickeln. Der mit der Lebensmittelverarbeitungsmaschine verbundene Rezeptgenerator ist somit einem kontinuierlichen Lernprozess ausgesetzt, der ihn anhand von in der Praxis gesammelten und maschinell ausgewerteten Erfahrungswerten zunehmend intelligenter werden lässt.

Bei der Erfindung kann der Rezeptgenerator mittels des Algorithmus, d.h. mit Mitteln der Mathematik und/oder der Informatik, insbesondere mit Mitteln der Neuroinformatik und/oder mittels maschinellen Lernens, intelligentes menschliches Verhalten von Experten, welches zum Anpassen und/oder Erweitern des Regelwerks geeignet wäre, simulieren.

Die Daten können dem Algorithmus fortlaufend oder intervallweise als Trainingsdaten zugeführt werden, wobei der Algorithmus dazu ausgebildet ist, auf Basis der Daten ein statistisches Modell aufzubauen, sprich sich mindestens eine praxisorientierte Gesetzmäßigkeit anzulernen, die ggf. von einer von den Experten aufgestellten Ausgangsregel differiert bzw. darauf aufbaut. Die aggregierten Daten, die als maschinenbezogene Erfahrungswerte dem Rezeptgenerator übermittelt werden, können daher mittels des Algorithmus zu allgemeingültigen Regeln und/oder Formel zusammengefasst werden, die ggf. das auf Expertenwissen aufgebaute Regelwerk ergänzen und/oder zumindest teilweise ersetzen können.

Insbesondere ist der Algorithmus für ein maschinelles Lernen konfiguriert. Der Algorithmus kann damit aus einer Menge von ihm zugeführten Daten mindestens eine allgemeine Regel für das Regelwerk ableiten. Dafür kann der Algorithmus die Struktur und Funktionsweise eines künstlichen neuronalen Netzes aufweisen. Auf Basis der erfassten Daten kann anhand des künstlichen neuronalen Netzes eine Selbstkorrektur des aktuell vorliegenden Regelwerks durchgeführt werden.

Als ein für maschinelles Lernen ausgebildeter Algorithmus kann der Algorithmus selbst anhand der erfassten Daten statistische Zusammenhänge bzw. ein Musterverhalten an der jeweiligen Lebensmittelverarbeitungsmaschine erlernen, worauf basierend automatisch im Sinne von artifiziell eine Anpassung und/oder Erweiterung des Regelwerks durchführbar ist.

Vorzugsweise ist der Rezeptgenerator dazu ausgebildet, während einer zeitgleich zum Betrieb einer oder mehrerer Lebensmittelverarbeitungsmaschinen durchführten Lernphase auf Basis der von ihm erfassten Daten sein Regelwerk auf Richtigkeit zu überprüfen und ggf. anzupassen, sofern die Lebensmittelverarbeitungsmaschine nicht sollwertig produziert. Somit findet die Lernphase automatisch im Hintergrund zu einem laufenden Betrieb mindestens einer Lebensmittelverarbeitungsmaschine statt.

In der Praxis kann es vorkommen, dass sich auf Basis einer Bedienereingabe anhand einer für den Rezeptgenerator von einem Experten entwickelten Ausgangsformel eine Rezeptvariable ergibt, die während des Betriebs der Lebensmittelverarbeitungsmaschine nicht zu einer gewünschten Zielgröße, beispielsweise einer gewünschten Werkzeugtemperatur, führt. Gemäß einer Variante der Erfindung ist diese Abweichung von der Zielgröße mittels einer an der Lebensmittelverarbeitungsmaschine installierten Sensorik erfassbar. Eine damit von der Zielgröße abweichende Qualitätsmessung kann ohne fachmännisches Zutun mittels des Algorithmus zur Änderung des Regelwerks eingesetzt werden, indem die Ausgangsregel derart angepasst wird, dass anhand einer daraus resultierenden neuen Rezeptvariablen an der beim Maschinenbetreiber installierten Lebensmittelverarbeitungsmaschine die gewünschte Zielgröße messbar ist. Damit ist es möglich, eine theoretische Ausgangsregel, die insbesondere durch Testverfahren beim Maschinenhersteller verifizierbar ist, unter Berücksichtigung der tatsächlichen Bedingungen beim Maschinenbetreiber, insbesondere auf Basis eines Approximationsverfahrens, maschinell zu optimieren.

Vorstellbar ist es, dass die Lebensmittelverarbeitungsmaschine von mehreren ein Produkt behandelnden und/oder ein Verpackungsmaterial bearbeitenden Arbeitsstationen erfasste Messsignale zusammen mit dazugehörigen Zielgrößen als Datenpakete an den Rezeptgenerator übermittelt, wobei der Rezeptgenerator dazu ausgebildet ist, bei tendenziell gleichartiger Abweichung der Messsignale von der jeweiligen Zielgröße eine Anpassung des Regelwerks, insbesondere mindestens einer diesen Messgrößen zugrundliegenden Ausgangsregel, anzusteuern.

Bei der Erfindung ist insbesondere vorgesehen, dass eine vom Rezeptgenerator erfasste aggregierte Datenmenge mehrerer Lebensmittelverarbeitungsmaschinen als Grundlage zur Anpassung dessen Regelwerks einsetzbar ist. In anderen Worten findet im Rezeptgenerator eine Anpassung des Regelwerks hinsichtlich einer vorbestimmten Datenmenge statt, insbesondere unter Verwendung einer Datenmenge, die mehrere Dimensionen haben kann, beispielsweise bezüglich eines Datenvolumens, der Daten-Herkunft, einer Datengeschwindigkeit, einer Bandbreite der Datentypen und/oder einer Echtheit der Daten. Das Regelwerk kann somit anhand zahlreicher Anwendungsfälle trainiert bzw. weiterentwickelt werden, sodass alle mit dem Rezeptgenerator verbundenen Lebensmittelverarbeitungsmaschinen davon profitieren können.

Vorzugsweise ist der als separate Einheit ausgebildete Rezeptgenerator eine mit mehreren Lebensmittelverarbeitungsmaschinen verbindbare cloudbasierte Software, die das anpassungsfähige Regelwerk aufweist. Die cloudbasierte Software kann anhand einer zentralen Servereinrichtung des Maschinenherstellers betrieben werden. Zwischen der Steuereinheit der jeweiligen Lebensmittelverarbeitungsmaschinen und dem als cloudbasierte Software zur Verfügung gestellten Rezeptgenerator kann ein bidirektionaler Datenaustausch eingerichtet sein, wobei in einer Richtung kontinuierlich Daten, beispielsweise Messwerte von an der Lebensmittelverarbeitungsmaschine ablaufenden Arbeitsprozessen, von den jeweiligen Lebensmittelverarbeitungsmaschinen an den Rezeptgenerator und in der anderen Richtung mittels des Rezeptgenerators berechnete Rezeptvariablen und daraus gebildete Rezeptdatensätze an die jeweiligen Lebensmittelverarbeitungsmaschinen zum Parametrisieren der daran ausgebildeten Steuereinheiten sendbar sind. Der zuletzt genannte Datentransfer kann zumindest während eines Einstellvorgangs der jeweiligen Lebensmittelverarbeitungsmaschinen geschehen.

Eine Ausführungsform sieht vor, dass der Rezeptgenerator mehrere Algorithmen aufweist, wobei jeder davon zum Erlernen eines gesonderten Regelwerks einem bestimmten Kunden und/oder einer bestimmten Maschinengattung zugewiesen ist. Dadurch wird erreicht, dass ein Betreiber zur Weiterentwicklung des von ihm abrufbaren Regewerks lediglich auf Daten aus seiner eigenen Produktion zurückgreift, was ggf. Vorteile beim Qualitätsmanagement mit sich bringen kann. Hier könnten daher Maschinenbetreiber zum Trainieren deren eigenen Regelwerks mit dem Rezeptgenerator verbunden sein.

Vorstellbar ist es, dass der Rezeptgenerator eine Datenverwaltungssoftware aufweist, anhand welcher die von ihm gesammelte Vielzahl an Daten mehrerer Lebensmittelverarbeitungsmaschinen in vorbestimmte Datengruppen eingliederbar sind, sprich zu Datenclustern aggregierbar sind. Anhand der derart sortierten Trainingsdaten werden problemlos praxisorientierte Messtendenzen, insbesondere messbare statistische Zusammenhänge, ersichtlich, die zur Anpassung des Regelwerks eingesetzt werden können. Beispielsweise könnten die von mehreren gleichartigen Lebensmittelverarbeitungsmaschinen, beispielsweise Tiefziehverpackungsmaschinen, gesammelten Daten zunächst einem gattungsgemäßen Datencluster hinsichtlich des vorliegenden Maschinentypen zugeordnet werden. Weiter könnten diese Daten hinsichtlich der an der Lebensmittelverarbeitungsmaschine eingesetzten Arbeitsstationen gruppiert werden, d.h. jeweilige Subcluster ausbilden. Ferner könnten diese Subcluster bezüglich verschiedener Arbeitsprozesse an den jeweiligen Arbeitsstationen unterteilt werden. Schließlich wäre es vorstellbar, die derart sortierten Datengruppierungen fortlaufend zu ergänzen und/oder zu erneuern.

Eine Variante sieht vor, dass das Regelwerk auf Basis von an mehreren Lebensmittelverarbeitungsmaschinen erfassten und an den Rezeptgenerator übermittelten Daten selbstlernend anpassungsfähig ist. Somit ist es möglich, dass an der Weiterentwicklung des Regelwerks, beispielsweise an einer allgemeingültigen Formel zum Bestimmen einer Siegelkraft zum Versiegeln einer bestimmten Materialpaarung, eine große Menge an Trainingsdaten von mehreren mit dem Rezeptgenerator verbundenen Lebensmittelverarbeitungsmaschinen berücksichtigt werden kann. Damit ist es möglich, das Regelwerk insgesamt kontinuierlich zu verbessern. Die an mehreren Lebensmittelverarbeitungsmaschinen erfassten und an den Rezeptgenerator übermittelten Daten können in Summe dazu beitragen, dass dessen Regelwerk unter Berücksichtigung mehrerer ortsverschiedener Anwendungsfälle, sozusagen unter verschiedenen maschinellen Trainingsbedingungen, anpassbar ist.

Vorzugsweise basieren die zur Anpassung des Regelwerks eingesetzten Daten auf mindestens einer, ggf. wiederholt, an der Lebensmittelverarbeitungsmaschine für den Arbeitsprozess manuell eingegebenen Rezeptvariablen und/oder mindestens einem manuell eingestellten Prozessparameter. Der Rezeptgenerator reagiert damit auf eine vom Bediener an der Lebensmittelverarbeitungsmaschine durchgeführte Korrektur bzw. Überschreibung einer Maschineneinstellung, anhand welcher dem Rezeptgenerator von Bedienerseite her signalisierbar ist, dass die von ihm errechnete Rezeptvariable nicht zum gewünschten Ergebnis führt.

Gemäß einer Ausführungsform der Erfindung basieren die zur Anpassung des Regelwerks eingesetzten Daten zumindest teilweise auf einer Verknüpfung der manuell eingegebenen Rezeptvariablen und/oder des manuell eingegebenen Prozessparameters mit mindestens einer damit zeitlich zusammenhängenden, am Ort der Lebensmittelverarbeitungsmaschine erfassbaren Umgebungsvariablen, beispielsweise einer Hallentemperatur, einer Luftfeuchtigkeit, einer Lichtstärke und/oder eines Luftdrucks. Diese Datenverknüpfung ermöglicht es, tatsächlich vor Ort auf den Betrieb der Lebensmittelverarbeitungsmaschine einwirkende Umwelteinflüsse bei der Weiterentwicklung des Regelwerks zu berücksichtigen. Insbesondere lassen sich anhand der miterfassten Umwelteinflüsse die jeweiligen Daten noch besser mittels der zuvor beschriebenen Datenverwaltungssoftware in Clustern gruppieren, um damit eine vorteilhafte Datenbasis zum Trainieren des Rezeptgenerators zu schaffen.

Vorzugsweise lautet eine von den Experten vorbestimmte Ausgangsregel des Rezeptgenerators, dass, insbesondere bei einer Hallentemperatur von 21 Grad, an einer darin installierten Lebensmittelverarbeitungsmaschine eine Verpackungsfolie für einen Tiefziehvorgang mit einer konstanten Vorheiztemperatur von 95 Grad (Rezeptvariable) vorgewärmt werden soll. Es kann aber sein, dass die Lebensmittelverarbeitungsmaschine an einem kühleren Ort installiert ist, beispielsweise bei einer Umgebungstemperatur von 4 bis 8 Grad betrieben werden soll. Wird unter diesen Bedingungen an der Lebensmittelverarbeitungsmaschine die Vorheiztemperatur in Abweichung zur eigentlichen Rezeptvariablen manuell von einem Bediener erhöht, kann die erhöhte Vorheiztemperatur zusammen mit der vorliegenden Umgebungstemperatur als Datenverknüpfung an den Rezeptgenerator übermittelt werden, worauf basierend die Ausgangsregel einer konstanten Vorheiztemperatur anpassbar ist. Ein dafür vom Algorithmus eingesetztes statistisches Modell könnte beispielsweise eine einfache lineare Regression oder ein neuronales Netz sein, anhand dessen weitere Umgebungsvariablen berücksichtigt und/oder weitere Ausgangsregeln erlernbar sind. Dieses statistische Modell kann um bedienerseitig durchgeführte Maschineneinstellungen erweitert werden.

Vorzugsweise ist das Regelwerk auf Basis von an den Rezeptgenerator übermittelten Daten anpassbar, die auf mindestens einer an mehreren Lebensmittelverarbeitungsmaschinen erfassten a posteriori Verteilung basieren. Damit ist es möglich, eine ggf. nicht mit dem Experten-Vorwissen übereinstimmende, sich während eines Zeitfensters statistisch einstellende Arbeitsweise der Lebensmittelverarbeitungsmaschine bei der Anpassung des Regelwerks zu berücksichtigen. Anhand der a posteriori Verteilung kann eine auf Vorwissen basierende a priori Verteilung, die beispielsweise vom Maschinenhersteller anhand des Betriebs eines Protomaschinentypen herleitbar ist, hinsichtlich neuer am Ort der Maschinenbetreiber beobachteter Maschineneinstellungen der Lebensmittelverarbeitungsmaschinen an die Praxis angepasst werden. Der Rezeptgenerator bildet somit eine artifizielle Einheit aus, dessen Regelwerk aus erfassten probabilistischen Informationen lernfähig ist.

Vorstellbar ist eine Ausgangsregel, die in Abhängigkeit eines Folientypen eine Siegelzeit festlegt, z.B. für eine APET Folie 1.5s beträgt. Ist nun vom Rezeptgenerator erfassbar, dass mehrheitlich an den mit ihm verbundenen Lebensmittelverarbeitungsmaschinen die Siegelzeit für die APET Folie um 0.5s erhöht wird, kann die Ausgangsregel dahingehend maschinell angepasst werden, dass für die Siegelzeit eine Prior-Verteilung mit einem Siegelzeit-Erwartungswert von 1.5s für die APET Folie gesetzt wird. Diese Prior-Verteilung kann mithilfe der gesammelten Daten bezüglich einer Änderung der Siegelzeit automatisch approximativ angepasst werden, zur sogenannten Posteriori-Verteilung. Der Erwartungswert der Posteriori-Verteilung für die Siegelzeit würde sich dann schrittweise in Richtung 1.8s bewegen.

Gemäß einer vorteilhaften Ausführungsvariante ist eine Anpassung des Regelwerks, insbesondere einer oder mehrerer darin enthaltener Ausgangsregeln, in Abhängigkeit einer vorgesehenen Anzahl an manuell durchgeführten Editierungen einer für den Einstellvorgang mittels des Rezeptgenerators berechneten Rezeptvariablen ansteuerbar, vor allem dann, wenn die Editierungen dieser Rezeptvariablen an verschiedenen Lebensmittelverarbeitungsmaschinen durchgeführt werden. Anhand des mehrmaligen Editierens einer berechneten Rezeptvariablen kann dem Rezeptgenerator von Bedienerseite her angezeigt werden, dass diese Rezeptvariable für den konkreten Anwendungsfall nicht optimal ist, insbesondere nicht zu der gewünschten Verpackungsqualität führt, wenn sie als Basis zur Berechnung von Prozessparametern zur Vorbelegung der Steuereinheit eingesetzt wird.

Gemäß einer vorteilhaften Ausführungsform ist der Rezeptgenerator dazu konfiguriert, trotz eines für eine Vielzahl an Lebensmittelverarbeitungsmaschinen erlernten Regelwerks zur Berechnung einer bestimmten Rezeptvariablen eine davon abweichende Rezeptvariable für eine aus der Vielzahl der Lebensmittelverarbeitungsmaschinen zu bestimmen, wenn an dieser Lebensmittelverarbeitungsmaschine eine vorbestimmte Anzahl an Überschreibungen der mittels des erlernten Regelwerks berechneten Rezeptvariablen erreicht ist. In anderen Worten ist es vorstellbar, dass mehrfach an einer bestimmten, mit dem Rezeptgenerator verbundenen Lebensmittelverarbeitungsmaschine durchgeführte Editierungen einer Rezeptvariablen dazu führen, dass der Rezeptgenerator die mehrfach editierte Rezeptvariable als eigene Rezeptvariable für diese Lebensmittelverarbeitungsmaschine festlegt, während für die anderen mit dem Rezeptgenerator verbundenen Lebensmittelverarbeitungsmaschinen die auf Basis des bis dato erlernten Regelwerks bestimmte allgemeingültige Rezeptvariable weiterhin gilt.

Beispielsweise lassen sich die Editierungen einer vom Rezeptgenerator herausgegebenen Rezeptvariablen mittels eines an der Steuereinrichtung der Lebensmittelverarbeitungsmaschinen installierten Zählers erfassen. Der aktuelle Zählerstand kann zusammen mit der diesbezüglichen Korrektureingabe an den Rezeptgenerator übermittelt werden. Damit ist es möglich, dass der Rezeptgenerator ausnahmsweise einer Lebensmittelverarbeitungsmaschine, an welcher der Zähler eine vorbestimmte Anzahl an Korrekturen einer bestimmten Rezeptvariablen aufgenommen hat, die abweichende Rezeptvariable dauerhaft vorhält, während er die anderen Lebensmittelverarbeitungsmaschinen weiterhin mit der gemäß seinem allgemein erlernten Regelwerk eigentlich berechneten Rezeptvariable als Basis zur Vorbelegung der Steuereinheit versorgt.

Vorzugsweise ist zusätzlich zur editierten Rezeptvariablen auch die eigentlich mittels des erlernten Regelwerks berechnete Rezeptvariable an der Lebensmittelverarbeitungsmaschine für einen Bediener anzeigbar. Damit lässt sich an der Lebensmittelverarbeitungsmaschine, beispielsweise an einem daran vorgesehenen Display einer HMI-Schnittstelle, sowohl die editierte als auch die allgemeingültig berechnete Rezeptvariable anzeigen. Sobald der Bediener merkt, dass die von ihm wiederholt eingestellte, abweichende Rezeptvariable nicht mehr zum erzielten Ergebnis führt, kann er die an der Lebensmittelverarbeitungsmaschine allgemeingültig angezeigte Rezeptvariable auswählen, sozusagen die editierte Rezeptvariable verwerfen. Ab diesem Zeitpunkt kann auch dieser Lebensmittelverarbeitungsmaschine wieder die mittels des bis dahin erlernten Regelwerks allgemeingültige Rezeptvariable vorgehalten werden.

Es ist möglich, dass der Rezeptgenerator ein gesondertes Regelwerk für mehrere unter vergleichbaren Umgebungsbedingungen eingesetzte Lebensmittelverarbeitungsmaschinen erzeugt, an welchen sich auf Basis der von ihnen erfassten und an den Rezeptgenerator übermittelten Daten tendenziell ein bestimmtes Korrekturmuster bezüglich editierter Rezeptvariablen erfassen lässt.

Eine bevorzugte Variante sieht vor, dass die Steuereinheit der Lebensmittelverarbeitungsmaschine eine HMI-Schnittstelle umfasst, woran ein Bediener Eingaben zur Herleitung der Rezeptvariablen tätigen kann. Die von ihm eingestellten Eingabewerte werden mittels des Rezeptgenerators in Rezeptvariablen umgerechnet, die dem Bediener beispielsweise auf einem Display der HMI-Schnittstelle anzeigbar sind. Ist der Bediener mit den berechneten Rezeptvariablen einverstanden, kann er diese an der HMI-Schnittstelle bestätigen, worauf basierend die Steuereinheit der Lebensmittelverarbeitungsmaschine für den Verpackungsprozess parametrisierbar ist.

Vorstellbar ist es, dass der Rezeptgenerator dazu konfiguriert ist, anhand eines Eingabewerts bzgl. eines herzustellenden Produkts, eines Verpackungstyps dafür, eines eingesetzten Maschinentypen, mindestens eines eingesetzten Werkzeugs der Lebensmittelverarbeitungsmaschine, einer Umgebungstemperatur, eines aufzubringenden Etiketts und/oder eines Folienmaterials die Rezeptvariablen zu erzeugen. Vorzugsweise lässt sich mindestens einer der vorgenannten Informationen automatisch von einer Auftragskarte, beispielsweise von einem bereitgestellten Barcode ablesen. Ein Barcodescanner kann beispielsweise an der HMI-Schnittstelle integriert ausgebildet sein.

Vorstellbar ist es, dass der Rezeptgenerator eine erweiterbare Packstoffdatenbank aufweist, wobei das Regelwerk fortlaufend auf Basis darin neu eingestellter und/oder eingelesener Packstoffmaterialien erweiterbar ist. Beispielsweise könnte das spezifische Packstoffmaterial mittels eines an der Lebensmittelverarbeitungsmaschine installierten Spektrometers detektiert und zusammen mit dafür von einem Bediener neu eingestellten Rezeptvariablen an den Rezeptgenerator übermittelt werden. Auf Basis dieser neuen Datenverknüpfung ist das Regelwerk des Rezeptgenerators um mindestens eine neue Regel und/oder Formel erweiterbar.

Es ist möglich, dass der Rezeptgenerator dazu ausgebildet ist, bereits an der Lebensmittelverarbeitungsmaschine für einen bestimmten Arbeitsprozess gespeicherte Datensätze der Steuereinheit auszulesen und die von ihm für den Arbeitsprozess ermittelbaren Rezeptdatensätze anhand der ausgelesenen Datensätze zu verifizieren. Insbesondere können auf Basis dieses Vergleichs gleich mehrere (Ausgangs-)Regeln erneuert werden.

Vorzugsweise ist die Lebensmittelverarbeitungsmaschine eine Tiefziehverpackungsmaschine, eine Schalenverschließmaschine, eine Schlauchbeutelmaschine, ein Etikettierer, eine Aufschneidemaschine, oder eine Teigverarbeitungsmaschine.

Vorstellbar ist es, dass die Vorrichtung eine Verpackungslinie ausbildet, die in Produktionsrichtung mehrere verschiedenartige Lebensmittelverarbeitungsmaschinen aufweist, wobei der Rezeptgenerator dazu ausgebildet ist, für die jeweiligen Lebensmittelverarbeitungsmaschinen aufeinander abgestimmte Rezeptvariablen zu bestimmen. Insbesondere können gemäß einer Variante mehrere Maschinen der Verpackungslinie daran erfasste Daten an den Rezeptgenerator zum Trainieren des Regelwerks übermitteln.

Vorstellbar wäre es, dass Daten von einer in der Verpackungslinie eingesetzten Verpackungsmaschine, die insbesondere in Form einer Tiefziehverpackungsmaschine oder in Form einer Schalenverschließmaschine vorliegt, für die Anpassung des Regelwerks priorisiert berücksichtigt werden, um zu gewährleisten, dass die Verpackungslinie eine vorbestimmte Produktionsrate einhält. Beispielsweise könnten die für die Verpackungsmaschine vom Rezeptgenerator priorisiert ausgegebenen Rezeptvariablen als Basis zur Berechnung der Rezeptvariablen für die anderen Lebensmittelverarbeitungsmaschinen dieser Verpackungslinie dienen.

Vorstellbar ist es, dass der Prozessparametergenerator dazu konfiguriert ist, die Prozessparameter mittels eines im Prozessparametergenerator ausgebildeten Regelwerks in Abhängigkeit von an der Lebensmittelverarbeitungsmaschine eingesetzten Werkzeugkomponenten anzupassen.

Die Erfindung betrifft auch ein Verfahren zur Generierung eines Rezeptdatensatzes für einen Einstellvorgang einer Lebensmittelverarbeitungsmaschine, wobei ein Rezeptgenerator der Lebensmittelverarbeitungsmaschine oder ein als separate Einheit ausgebildeter und mit der Lebensmittelverarbeitungsmaschine funktional verbindbarer Rezeptgenerator mittels eines Regelwerks hinsichtlich mindestens eines von dem Bediener einer Lebensmittelverarbeitungsmaschine auswählbaren Eingabewerts bestimmte Rezeptvariablen für den Rezeptdatensatz erzeugt, und wobei ein Prozessparametergenerator der Lebensmittelverarbeitungsmaschine eine Steuereinheit der Lebensmittelverarbeitungsmaschine für einen Arbeitsprozess mit spezifischen Prozessparametern vorbelegt, die zumindest teilweise auf den jeweiligen für den Einstellvorgang erzeugten Rezeptvariablen des Rezeptdatensatzes basieren.

Erfindungsgemäß passt der Rezeptgenerator auf Basis von an der Lebensmittelverarbeitungsmaschine erfassten und an ihn übermittelten Daten selbstlernend das an ihm zur Bestimmung von Rezeptvariablen für den Einstellvorgang eingestellte Regelwerk vorlaufend anhand eines Algorithmus an.

Ausführungsbeispiele der Erfindung werden im Folgenden anhand von Figuren näher erläutert. Dabei zeigen:
Fig. 1 einen als cloudbasierte Software ausgebildeten Rezeptgenerator in funktionaler Verbindung mit verschiedenen Lebensmittelverarbeitungsmaschinen,
Fig. 2 eine mit dem Rezeptgenerator zusammen einsetzbare Tiefziehverpackungsmaschine,
Fig. 3 eine mit dem Rezeptgenerator zusammen einsetzbare Schalenverschließmaschine,
Fig. 4 einen mit dem Rezeptgenerator zusammen einsetzbaren Etikettierer,
Fig. 5 eine mit dem Rezeptgenerator zusammen einsetzbare Aufschneideeinrichtung,
Fig. 6 eine mit dem Rezeptgenerator zusammen einsetzbare Teigverarbeitungsmaschine, und
Fig. 7 eine mit dem Rezeptgenerator zusammen einsetzbare Verpackungslinie mit mehreren Lebensmittelverarbeitungsmaschinen.

Gleiche technische Merkmale sind in den Figuren durchgängig mit denselben Bezugszeichen versehen.

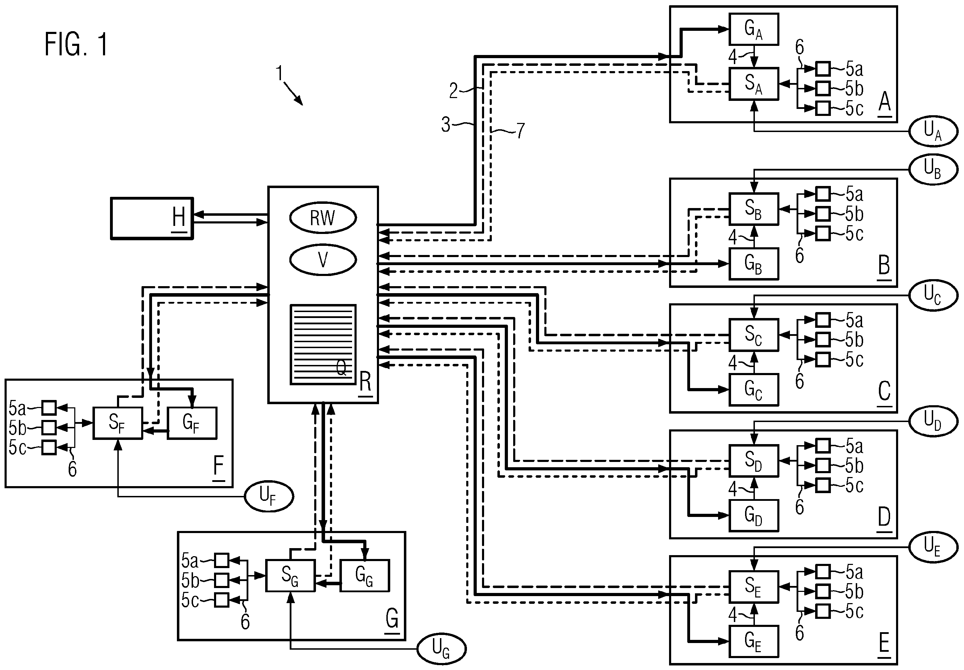

Fig. 1 zeigt eine Vorrichtung 1 mit einem Rezeptgenerator R, der als cloudbasierte Software ausgebildet ist und funktional mit verschiedenen Lebensmittelverarbeitungsmaschinen A - F zusammenarbeitet. Des Weiteren ist der Rezeptgenerator R funktional mit einer Verpackungslinie G verbunden.

In Fig. 1 bildet der Rezeptgenerator R eine cloudbasierte, separate Einheit aus, die für einen bidirektionalen Datenaustausch mit den jeweiligen Lebensmittelverarbeitungsmaschinen A - F sowie mit der Verpackungslinie G eingerichtet ist. Der Rezeptgenerator R ist somit als webbasierte, zentrale Software von den jeweiligen mit ihm verbindbaren Lebensmittelverarbeitungsmaschinen A - F sowie von der Verpackungslinie G aus nutzbar.

Des Weiteren zeigt Fig. 1, dass der Rezeptgenerator R für einen bidirektionalen Datenaustausch mit einer Servereinrichtung H, die insbesondere vom Maschinenhersteller zumindest einer der Lebensmittelverarbeitungsmaschinen A - F und/oder zumindest einer der in der Verpackungslinie G eigesetzten Maschinen betreibbar ist, verbunden ist. Über die Servereinrichtung H hat der Maschinenhersteller Zugriff auf ein anhand von Expertenwissen aufgebautes Regelwerk RW, das Teil des Rezeptgenerators R ist. Das Regelwerk RW des Rezeptgenerators R ist als Formel- bzw. Regelsammlung für eine Vielzahl an den Lebensmittelverarbeitungsmaschinen A - F ablaufenden Prozesse ausgebildet, die auf Basis von Maschineneinstellungen und/oder erfassten Maschinendaten während des Betriebs lernfähig ist. Damit ist gemeint, dass ursprünglich von Experten erstellte Formeln und/oder Regeln zum Herleiten von spezifischen Maschineneinstellungen anhand des tatsächlich in der Praxis erfassbaren Betriebs der Lebensmittelverarbeitungsmaschinen A - F anpassungsfähig sind.

Der funktionale Datenaustausch zum Weiterentwickeln des auf dem Rezeptgenerator R eingesetzten Regelwerks RW wird im Folgenden im Zusammenhang mit der Lebensmittelverarbeitungsmaschine A beschrieben.

Die Lebensmittelverarbeitungsmaschine A weist eine Steuereinheit S_{A} auf. An der Steuereinheit S_{A} getätigte Bedienereingaben, beispielsweise während eines Einstellvorgangs, können von der Steuereinheit S_{A} über eine mit dem Rezeptgenerator R verbundene Datenleitung 2 als Eingabewerte an den Rezeptgenerator R übermittelt werden. Der Rezeptgenerator R empfängt die jeweiligen Eingabewerte von der Lebensmittelverarbeitungsmaschine A und berechnet aus diesen anhand des Regelwerks RW entsprechende Rezeptvariablen, die über die in Fig. 1 schematisch dargestellte Datenverbindung 3 an die Lebensmittelverarbeitungsmaschine A übermittelt werden.

Die Rezeptvariablen liegen entweder einzeln oder gleich als kumulierter Rezeptdatensatz vor und werden an der Lebensmittelverarbeitungsmaschine A einem daran ausgebildeten Prozessparameter-Generator G_{A} zugeführt, der als integraler Berechnungsteil der Steuereinheit S_{A} vorliegen kann. Dieser Prozessparameter-Generator G_{A} ist dazu konfiguriert, für einen oder mehrere Arbeitsprozesse der Lebensmittelverarbeitungsmaschine A spezifische Prozessparameter zu bestimmen, die zumindest teilweise auf den vom Rezeptgenerator R empfangenen Rezeptvariablen basieren. Fig. 1 zeigt, dass vom Prozessparameter-Generator G_{A} berechneten spezifischen Prozessparameter über eine Datenverbindung 4 an die Steuereinheit S_{A} übermittelt wird. Die vom Prozessparameter-Generator G_{A} hergestellten Prozessparameter dienen zur Parametrisierung der Steuereinheit S_{A} der Lebensmittelverarbeitungsmaschine A für deren eigentlichen, d.h. dem Einstellvorgang anschließenden, Verpackungsprozess zur Herstellung von Produkten.

Weiter zeigt Fig. 1 schematisch, dass die Steuereinheit S_{A} mit mehreren Arbeitsstationen 5a - 5c verbunden ist. Die Steuereinheit S_{A} hat die Funktion, die jeweiligen an den Arbeitsstationen 5a - 5C ablaufenden Prozesse zu steuern und zu überwachen. Dafür sind die jeweiligen Arbeitsstationen 5a - 5c über eine bidirektionale Datenverbindung 6 mit der Steuereinheit S_{A} verbunden, über welche die Arbeitsstationen 5a - 5C auf Basis der berechneten Prozessparameter angesteuert sowie an den Arbeitsstationen 5a - 5c während des Betriebs der Lebensmittelverarbeitungsmaschine A erfasste Sensormesswerte an die Steuereinheit S_{A} übermittelt werden können. Die Steuereinheit S_{A} leitet diese empfangenen Sensormesswerte, insbesondere in Echtzeit, über eine Datenverbindung 7 an den Rezeptgenerator R weiter, um diesen über den laufenden Betrieb der Lebensmittelverarbeitungsmaschine A, insbesondere die Prozessgenauigkeit der daran ausgebildeten Arbeitsstationen 5a - 5c, zu informieren.

Die vom Rezeptgenerator R über die Datenverbindung 7 empfangenen Daten können mittels einer am Rezeptgenerator R betriebenen Datenverwaltungssoftware V verschiedenen Datenclustern zugeordnet werden. Der Rezeptgenerator R weist außerdem einen Algorithmus Q auf, der dazu konfiguriert ist, anhand der über die Datenverbindung 7 empfangenen Daten das Regelwerk RW zu verifizieren und ggf. anzupassen. Damit ist gemeint, dass der Algorithmus Q in Abhängigkeit der aus dem Betrieb der Lebensmittelverarbeitungsmaschine A empfangenen Daten eine Anpassung des Regelwerks R veranlassen kann. Die aus dem Betrieb der Arbeitsstationen 5a - 5c gewonnenen Daten dienen dabei dem Algorithmus Q als Trainingsdaten, auf Basis derer eine kontinuierliche Anpassung des Regelwerks RW stattfinden kann.

Damit kann das über die Servereinrichtung H ursprünglich errichtete Regelwerk RW des Rezeptgenerators R unter Berücksichtigung der während des Betriebs der Lebensmittelverarbeitungsmaschine A an den jeweiligen Arbeitsstationen 5a - 5c erhaltenen Sensormesswerte ständig erneuert werden.

Das vorangehend beschriebene technische Prinzip zur Weiterentwicklung des auf dem Rezeptgenerator R hinterlegten Regelwerks RW ist auch im Zusammenhang mit den anderen Lebensmittelverarbeitungsmaschinen B - F und mit der Verpackungslinie G anwendbar. Vor allem aber kann das Regelwerk RW auf Basis der von mehreren, ggf. verschiedenen Lebensmittelverarbeitungsmaschinen A - F am Rezeptgenerator R empfangenen Daten für alle Lebensmittelverarbeitungsmaschinen A - F weiterentwickelt werden, sodass die Lebensmittelverarbeitungsmaschinen A - F voneinander profitieren können.

Fig. 1 zeigt auch, dass an jeweiligen Lebensmittelverarbeitungsmaschinen A - F jeweilige Umgebungseinflüsse U_{A} - U_{G} an die entsprechenden Steuereinheiten S_{A} - S_{G} übermittelt werden können. Bei den Umgebungseinflüssen U_{A} - U_{G} kann es sich beispielsweise um eine Hallentemperatur, eine Lichtstärke, eine Luftfeuchtigkeit, einen Luftdruck und/oder andere technisch erfassbare Rahmenbedingungen handeln, welchen die jeweilige Lebensmittelverarbeitungsmaschine A - F oder die Verpackungslinie G während des Betriebs ausgesetzt sind. Rein exemplarisch könnte es sein, dass die während des Betriebs der Lebensmittelverarbeitungsmaschine A aufgenommenen Umgebungseinflüsse U_{A} an die Steuereinheit S_{A} übermittelt werden und von dieser zusammen mit den an den jeweiligen Arbeitsstationen 5a - 5c unmittelbar aufgenommenen Sensormesswerten als Datenpakete zusammengefasst an den Rezeptgenerator R übermittelt werden. Auf Basis dieser vom Rezeptgenerator R empfangenen zusammengehörigen Daten ließen sich ggf. mittels des Algorithmus Q zusätzliche, speziell an die jeweiligen Umgebungseinflüssen U_{A} - U_{G} angepasste Regeln für das Regelwerk RW bestimmen.

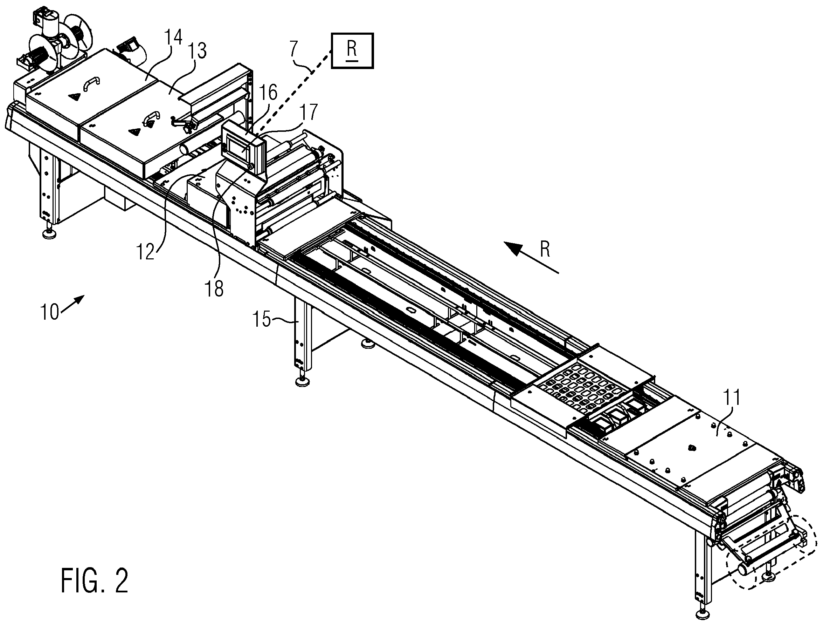

Die in Fig. 1 gezeigten Lebensmittelverarbeitungsmaschinen A - F können verschiedene oder gleichartige Maschinentypen sein. Vorstellbar ist es, dass der in Fig. 1 dargestellte Rezeptgenerator R mit mehreren, an verschiedenen Orten arbeitenden Lebensmittelverarbeitungsmaschinen A - F zusammenarbeitet, wobei diese Lebensmittelverarbeitungsmaschinen A - F als Tiefziehverpackungsmaschinen 10 (siehe Fig. 2) konfiguriert sind. Es könnte aber auch sein, dass die jeweiligen Lebensmittelverarbeitungsmaschinen A - F verschiedene Maschinentypen ausbilden, solche, die beispielsweise in den folgenden Fig. 2 . beschrieben werden.

Fig. 2 zeigt eine Tiefziehverpackungsmaschine 10, die beispielsweise in Funktion der in Fig. 1 schematisch dargestellten Lebensmittelverarbeitungsmaschine A mit dem Rezeptgenerator R verbunden ist. Fig. 2 zeigt, dass die Tiefziehverpackungsmaschine 10 eine Formstation 11, eine Siegelstation 12, eine Querschneideeinrichtung 13 und eine Längsschneideeinrichtung 14 aufweist, die in dieser Reihenfolge in einer Transportrichtung R an einem Maschinengestell 15 angeordnet sind. Die Tiefziehverpackungsmaschine 10 verfügt ferner über eine Steuereinheit 16. Sie hat die Aufgabe, die in der Tiefziehverpackungsmaschine 10 ablaufenden Prozesse zu steuern und zu überwachen. Eine Anzeigevorrichtung 17 mit Bedienelementen 18 dient zum Visualisieren und Beeinflussen der Prozessabläufe in der Tiefziehverpackungsmaschine 10 für bzw. durch einen Bediener.

Im Zusammenhang mit der Erfindung können die an der Tiefziehverpackungsmaschine 10 eingesetzte Formstation 11, Siegelstation 12, Querschneideeinrichtung 13 und/oder Längsschneideeinrichtung 14 in Funktion der in Fig. 1 gezeigten Arbeitsstationen 5a - 5c zum Einsatz kommen, deren erfasste Betriebsdaten als Trainingsdaten zur Weiterentwicklung des Regelwerks RW des Rezeptgenerators R eingesetzt werden. Die in Fig. 2 gezeigte Steuereinheit 16 der Tiefziehverpackungsmaschine 10 kann dafür wie die in Fig. 1 gezeigte Steuereinheit S_{A} der Lebensmittelverarbeitungsmaschine A funktionieren.

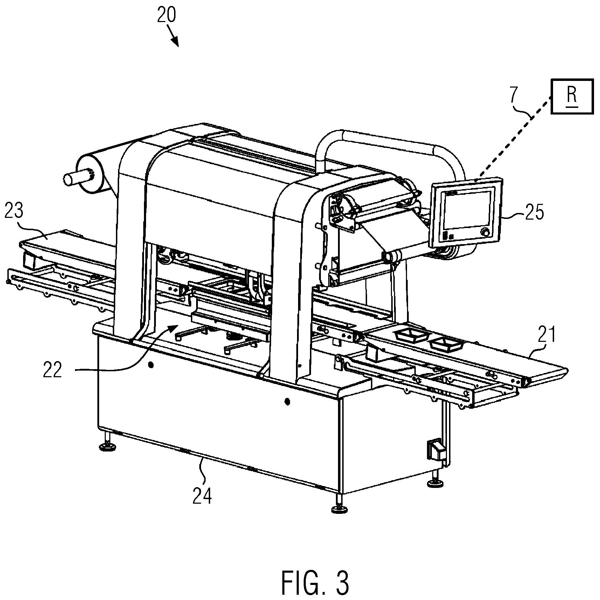

Fig. 3 zeigt eine Schalenverschließmaschine 20, die gemäß eine der Lebensmittelverarbeitungsmaschinen A - F mit dem Rezeptgenerator R verbindbar ist. Die Schalenverschließmaschine 20 aus Fig. 3 verfügt über ein Zuführband 21, eine Siegelstation 22 und ein Abführband 23, die in dieser Reihenfolge in einer Transportrichtung T an einem Maschinengestell 24 befestigt sind. Die Schalenverschließmaschine 20 weist ferner eine Steuereinheit 25 auf, an welcher die in der Schalenverschließmaschine 20 ablaufenden Prozesse steuerbar und überwachbar sind. Wie die Tiefziehverpackungsmaschine 10 aus Fig. 2 kann die Schalenverschließmaschine 20 aus Fig. 3 als eine der in Fig. 1 gezeigten Lebensmittelverarbeitungsmaschinen A - F mit dem Rezeptgenerator R verbunden sein, um mithilfe des webbasierten Rezeptgenerators R Prozessparameter für die Steuereinheit 25 herzustellen und diesen anhand der während des Betriebs erfassten Sensormesswerte zu trainieren. Die Steuereinheit 25 der Schalenverschließmaschine 20 kann daher gemäß der Steuereinheit S_{A} der Lebensmittelverarbeitungsmaschine A funktionieren. Die Siegelstation 22 aus Fig. 3 hat die Funktion einer der in Fig. 1 schematisch dargestellten Arbeitsstationen 5a - 5c der Lebensmittelverarbeitungsmaschine A.

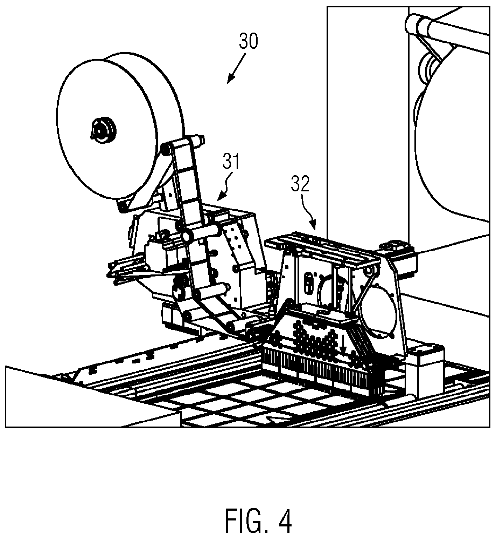

Fig. 4 zeigt einen Etikettierer 30, der beispielsweise an einer Tiefziehverpackungsmaschine 10 gemäß Fig. 2 in Produktionsrichtung R hinter der Siegelstation 12 einsetzbar ist, um an den versiegelten Verpackungen ein Etikett anzubringen. Der Etikettierer 30 weist einen Etikettenspender 31 und eine Schieberbaugruppe 32 zum Anbringen der Etiketten auf. Ein Betrieb des in Fig. 4 gezeigten Etikettierers 30 mittels einer Steuereinheit der Tiefziehverpackungsmaschine 10, beispielsweise anhand der Steuereinheit 16 aus Fig. 2, gesteuert werden. Auch der in Fig. 4 gezeigte Etikettierer 30 kann funktional wie eine der in Fig. 1 gezeigten Lebensmittelverarbeitungsmaschinen A - F mit dem Rezeptgenerator R verbunden sein, um daran erfasste Sensormesswerte zum Trainieren des Rezeptgenerators R, d.h. zum Anpassen des dort hinterlegten Regelwerks RW, zuzuführen.

Vorstellbar ist es, dass eine dem Etikettierer 30 in Produktionsrichtung R nachgeordnete und/oder direkt am Etikettierer 30 ausgebildete Leseeinheit auf den Etiketten aufgedruckte Informationen erfasst, wobei diesbezügliche Daten als Trainingsdaten über die Datenverbindung 7 zum Rezeptgenerator R zur Weiterentwicklung des Regelwerks RW gesendet werden.

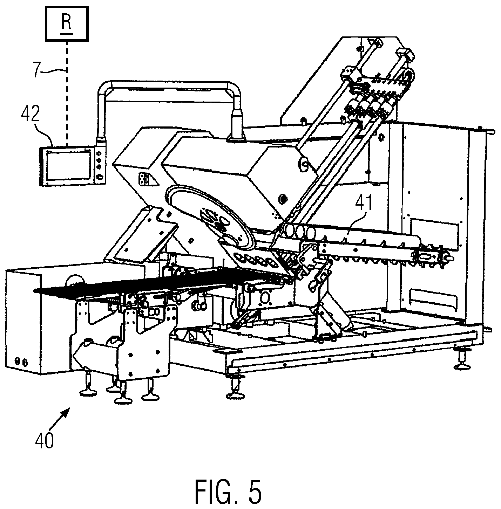

Fig. 5 zeigt eine Aufschneideeinrichtung 40 zum Aufschneiden eines Lebensmittelprodukts 41 in Scheiben. Die Aufschneideeinrichtung 40 weist eine Steuereinheit 42 auf, mittels welcher sich die an der Aufschneideeinrichtung 40 ablaufenden Prozesse steuern und überwachen lassen. Die Aufschneideeinrichtung 40 kann gemäß den vorangehend beschriebenen Maschinen mit dem Rezeptgenerator R aus Fig. 1 funktional verbunden sein. Die Steuereinheit 42 der Aufschneideeinrichtung 40 kann dabei zum Datenaustausch sowie zur Datengenerierung wie die Steuereinheit S_{A} der Lebensmittelverarbeitungsmaschine A aus Fig. 1 eingesetzt werden.

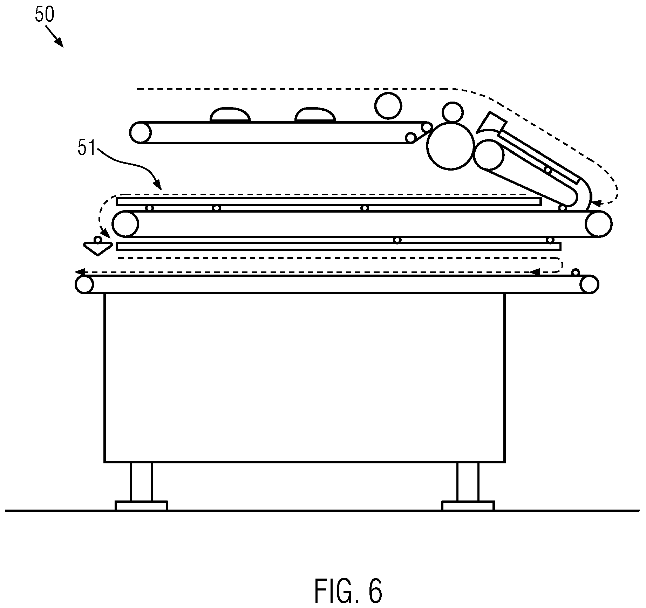

Fig. 6 zeigt eine Lebensmittelverarbeitungsmaschine, die in Form einer Teigverarbeitungsmaschine 50 vorliegt. Die Teigverarbeitungsmaschine 50 bildet eine Bearbeitungsstrecke 51 aus, die dazu konfiguriert ist, Teigröllchen zu kneten. Die Teigverarbeitungsmaschine 50, insbesondere dessen nicht gezeigte Steuereinheit, kann gemäß der Lebensmittelverarbeitungsmaschine A aus Fig. 1 für einen Datenaustausch mit dem Rezeptgenerator R verbunden sein. Die während des Betriebs der Teigverarbeitungsmaschine 50 aufgezeichneten Sensormesswerte können als Trainingsdaten an den Rezeptgenerator R übermittelt werden, worauf basierend dieser ggf. mittels des daran ausgebildeten Algorithmus Q eine Anpassung des Regelwerks RW für die Teigverarbeitungsmaschine 50 und andere Teigverarbeitungsmaschinen durchführt.

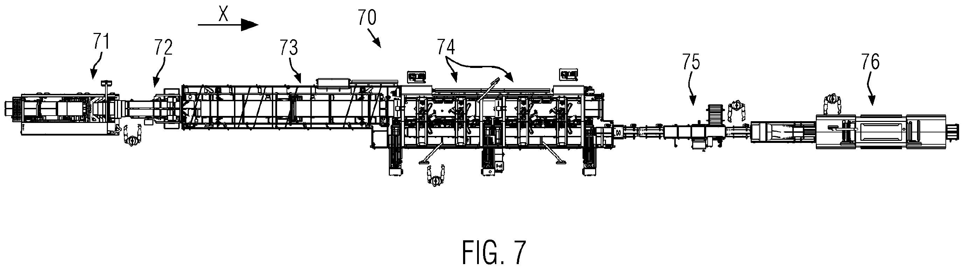

Fig. 7 zeigt eine Verpackungslinie 70 in Draufsicht. Die Verpackungslinie 70 weist eine Aufschneideeinrichtung 71, eine Wiegestation 72, eine Puffertransportvorrichtung 73, eine Verladestation 74, eine Qualitätsüberprüfungsstation 75 sowie eine Verpackungsmaschine 76 auf, die in dieser Reihenfolge in Produktionsrichtung X angeordnet sind. Die Aufschneideeinrichtung 71, die Wiegestation 72, die Puffertransportvorrichtung 73, die Verladestation 74, die Qualitätsüberprüfungsstation 75 und die Verpackungsmaschine 76 der Verpackungslinie 70 können jeweils als Arbeitsstationen der in Fig. 1 schematisch dargestellten Verpackungslinie G mit dem Rezeptgenerator R verbunden sein, um daran erfasste Sensormesswerte zum Trainieren des vom Rezeptgenerator R angelernten Regelwerks RW einzusetzen.

Der vorangehend in den jeweiligen Figuren 1 bis 7 als cloudbasierte Softwareanwendung zentral für die Lebensmittelverarbeitungsmaschinen A - F konfigurierte Rezeptgenerator R könnte alternativ dazu als integraler Bestandteil der jeweiligen Steuereinheiten S_{A-F} ausgebildet sein. In anderen Worten könnte jede der Lebensmittelverarbeitungsmaschinen A - F einen eigenen Rezeptgenerator R besitzen, dessen Regelwerk RW anhand der erfassten Daten der jeweiligen Lebensmittelverarbeitungsmaschine A - F trainierbar ist, sodass jede der Lebensmittelverarbeitungsmaschinen A - F das daran mittels des Rezeptgenerators R zur Verfügung gestellte Regelwerk RW vorrangig auf Basis eigener Maschinendaten weiterentwickelt.

## Patentansprüche

1. Vorrichtung (1), umfassend mindestens eine Lebensmittelverarbeitungsmaschine (A - F), die eine Steuereinheit (S_{A - F}) mit einem Prozessparametergenerator (G_{A - F}) umfasst, der dazu ausgebildet ist, für einen Arbeitsprozess der Lebensmittelverarbeitungsmaschine (A - F) spezifische Prozessparameter zu bestimmen, wobei die Steuereinheit (S_{A - F}) ferner einen Rezeptgenerator für einen dem Herstellungsvorgang vorangehenden Einstellvorgang der Lebensmittelverarbeitungsmaschine (A - F) umfasst oder wobei die Vorrichtung (1) einen als separate Einheit ausgebildeten Rezeptgenerator (R) aufweist, der mit der Steuereinheit (S_{A - F}) der Lebensmittelverarbeitungsmaschine (A - F) funktional verbindbar ist, wobei der jeweilige Rezeptgenerator (R) mindestens ein Regelwerk (RW) zur Bestimmung von Rezeptvariablen für den Einstellvorgang der Lebensmittelverarbeitungsmaschine (A - F) umfasst und dazu ausgebildet ist, anhand eines oder mehrerer Eingabewerte die Rezeptvariablen zu erzeugen und daraus einen Rezeptdatensatz für den Einstellvorgang der Lebensmittelverarbeitungsmaschine (A -F) zu bilden, und wobei der Prozessparametergenerator (G _{A - F}) dazu ausgebildet ist, die Steuereinheit (S _{A - F}) für den Arbeitsprozess der Lebensmittelverarbeitungsmaschine (A - F) mit spezifischen Prozessparametern vorzubelegen, die zumindest teilweise auf den jeweiligen für den Einstellvorgang erzeugten Rezeptvariablen des Rezeptdatensatzes basieren, **dadurch gekennzeichnet, dass** der Rezeptgenerator (R) dazu konfiguriert ist, auf Basis von an der Lebensmittelverarbeitungsmaschine (A - F) erfassten und an ihn übermittelten Daten selbstlernend das an ihm zur Bestimmung von Rezeptvariablen für den Einstellvorgang eingestellte Regelwerk (RW) fortlaufend anhand eines Algorithmus (Q) anzupassen.

2. Vorrichtung nach Anspruch 1, **dadurch gekennzeichnet, dass** der als separate Einheit ausgebildete Rezeptgenerator (R) eine mit mehreren Lebensmittelverarbeitungsmaschinen (A - F) verbindbare Cloud-basierte Software ist, die das anpassungsfähige Regelwerk (RW) aufweist.

3. Vorrichtung nach Anspruch 1 oder 2, **dadurch gekennzeichnet, dass** das Regelwerk (RW) auf Basis von an mehreren Lebensmittelverarbeitungsmaschinen (A - F) erfassten und an den Rezeptgenerator (R) übermittelten Daten selbstlernend anpassungsfähig ist.

4. Vorrichtung nach einem der vorigen Ansprüche, **dadurch gekennzeichnet, dass** die zur Anpassung des Regelwerks (RW) eingesetzten Daten an der Lebensmittelverarbeitungsmaschine (A - F) während deren Arbeitsprozess erfasste Sensormesswerte sind, anhand derer das Regelwerk (RW) bestätigbar oder anpassbar ist.

5. Vorrichtung nach einem der vorigen Ansprüche, **dadurch gekennzeichnet, dass** die zur Anpassung des Regelwerks (RW) eingesetzten Daten auf mindestens einer an der Lebensmittelverarbeitungsmaschine (A - F) für den Arbeitsprozess manuell eingegebenen Rezeptvariablen und/oder mindestens einem manuell eingestellten Prozessparameter basieren.

6. Vorrichtung nach Anspruch 5, **dadurch gekennzeichnet, dass** die zur Anpassung des Regelwerks (RW) eingesetzten Daten auf einer Verknüpfung der manuell eingegebenen Rezeptvariablen und/oder des manuell eingegebenen Prozessparameters mit mindestens einer damit zeitlich zusammenhängenden, am Ort der Lebensmittelverarbeitungsmaschine (A - F) erfassbaren Umgebungsvariablen (U _{A - F}) basieren.

7. Vorrichtung nach einem der vorigen Ansprüche, **dadurch gekennzeichnet, dass** die Anpassung des Regelwerks (RW) in Abhängigkeit einer vorgesehenen Anzahl an manuell durchgeführten Editierungen einer für den Einstellvorgang mittels des Rezeptgenerators (R) berechneten Rezeptvariablen ansteuerbar ist.

8. Vorrichtung nach einem der vorigen Ansprüche, **dadurch gekennzeichnet, dass** das Regelwerk (RW) auf Basis von an den Rezeptgenerator (R) übermittelten Daten anpassbar ist, die auf mindestens einer an mehreren Lebensmittelverarbeitungsmaschinen (A - F) erfassten a posteriori Verteilung basieren.

9. Vorrichtung nach einem der vorigen Ansprüche, **dadurch gekennzeichnet, dass** die Steuereinheit (S_{A-F}) der Lebensmittelverarbeitungsmaschine (A - F) eine HMI-Schnittstelle umfasst, woran die Eingabewerte durch einen Bediener zur Generierung der Rezeptvariablen auswählbar sind.

10. Vorrichtung nach einem der vorigen Ansprüche, **dadurch gekennzeichnet, dass** der Rezeptgenerator (R) dazu konfiguriert ist, trotz eines für eine Vielzahl an Lebensmittelverarbeitungsmaschinen (A - F) erlernten Regelwerks (RW) zur Berechnung einer bestimmten Rezeptvariablen eine davon abweichende Rezeptvariable für eine aus der Vielzahl der Lebensmittelverarbeitungsmaschinen (A - F) zu bestimmen, wenn an dieser Lebensmittelverarbeitungsmaschine (A - F) eine vorbestimmte Anzahl an Überschreibungen der mittels des erlernten Regelwerks (RW) berechneten Rezeptvariablen erreicht ist.

11. Vorrichtung nach Anspruch 10, **dadurch gekennzeichnet, dass** zusätzlich zur abweichenden Rezeptvariablen auch die eigentlich mittels des erlernten Regelwerks (RW) berechnete Rezeptvariable an der Lebensmittelverarbeitungsmaschine (A - F) für einen Bediener anzeigbar ist.

12. Vorrichtung nach einem der vorigen Ansprüche, **dadurch gekennzeichnet, dass** die Lebensmittelverarbeitungsmaschine (A - F) eine Tiefziehverpackungsmaschine (10), eine Schalenverschließmaschine (20), eine Schlauchbeutelmaschine, ein Etikettierer (30), eine Aufschneidemaschine (40) oder eine Teigverarbeitungsmaschine (50) ist.

13. Vorrichtung nach einem der vorigen Ansprüche, **dadurch gekennzeichnet, dass** die Vorrichtung (1) eine Verpackungslinie (70) ausbildet, die in Produktionsrichtung (X) mehrere verschiedenartige Lebensmittelverarbeitungsmaschinen (A - F) aufweist, wobei der Rezeptgenerator (R) dazu ausgebildet ist, für die jeweiligen Lebensmittelverarbeitungsmaschinen (A - F) aufeinander abgestimmte Rezeptvariablen zu bestimmen.

14. Vorrichtung nach einem der vorigen Ansprüche, **dadurch gekennzeichnet, dass** der Prozessparametergenerator (G _{A - F}) dazu ausgebildet ist, die Prozessparameter mittels eines im Prozessparametergenerator ausgebildeten Regelwerks in Abhängigkeit von an der Lebensmittelverarbeitungsmaschine (A - F) eingesetzten Werkzeugkomponenten anzupassen.

15. Verfahren zur Generierung eines Rezeptdatensatzes für einen Einstellvorgang einer Lebensmittelverarbeitungsmaschine (A - F), wobei ein Rezeptgenerator der Lebensmittelverarbeitungsmaschine (A - F) oder ein als separate Einheit ausgebildeter und mit der Lebensmittelverarbeitungsmaschine (A - F) funktional verbindbarer Rezeptgenerator (R) mittels eines Regelwerks (RW) hinsichtlich mindestens eines von einem Bediener an der Lebensmittelverarbeitungsmaschine (A - F) auswählbaren Eingabewerts bestimmte Rezeptvariablen für den Rezeptdatensatz erzeugt, und wobei ein Prozessparametergenerator (G _{A - F}) der Lebensmittelverarbeitungsmaschine (A - F) eine Steuereinheit (S _{A - F}) der Lebensmittelverarbeitungsmaschine (A - F) für einen Arbeitsprozess mit spezifischen Prozessparametern vorbelegt, die zumindest teilweise auf den jeweiligen für den Einstellvorgang erzeugten Rezeptvariablen des Rezeptdatensatzes basieren, **dadurch gekennzeichnet, dass** der Rezeptgenerator (R) auf Basis von an der Lebensmittelverarbeitungsmaschine (A - F) erfassten und an ihn übermittelten Daten selbstlernend das an ihm zur Bestimmung von Rezeptvariablen für den Einstellvorgang eingestellte Regelwerk (RW) fortlaufend anhand eines Algorithmus (Q) anpasst.
